# EUROPÄISCHE PATENTSCHRIFT

(11) **EP 3 663 370 B1**
(45) Veröffentlichungstag und Bekanntmachung des Hinweises auf die Patenterteilung: **01.05.2024**
(21) Anmeldenummer: 18210057.8
(22) Anmeldetag: 04.12.2018
(51) Int. Cl.: C09D 175/04, C08L 101/10

(54) **LÖSEMITTELHALTIGE ZUSAMMENSETZUNG FÜR EIN 2K-BESCHICHTUNGSSYSTEM UND DEREN VERWENDUNG**
SOLVENT-CONTAINING COMPOSITION FOR A 2K COATING SYSTEM AND ITS USE
COMPOSITION CONTENANT UN SOLVANT POUR UN SYSTÈME DE REVÊTEMENT 2K ET SON UTILISATION

(43) Veröffentlichungstag der Anmeldung: 10.06.2020
(73) Patentinhaber: DAW SE, 64372 Ober-Ramstadt (DE)
(72) Erfinder: MENZEL, Stefan, 63110 Rodgau (DE); DANIEL, André, 64397 Modautal (DE); OTTENS, Stephan, 64372 Ober-Ramstadt (DE)
(74) Vertreter: Metten, Karl-Heinz

(56) Entgegenhaltungen:
- EP-A1- 2 617 778
- JP-A- 2013 023 478

## Beschreibung

Die vorliegende Erfindung betrifft lösemittelhaltige Zusammensetzungen für ein 2K-Beschichtungssystem und dieses 2K-Beschichtungssystem sowie die Verwendung der lösemittelhaltigen Zusammensetzung als Komponente eines 2 K-Bauten- oder 2 K-Klarlacks und die Verwendung des 2K-Beschichtungssystems als Bauten- oder Klarlack.

Lacke kommen in vielfältiger Form und für mannigfaltige Zwecke zum Einsatz, beispielsweise als Schiffslacke, Bautenlacke, Möbellacke, Kraftfahrzeuglacke, Klarlacke, Unidecklacke, Basislacke, Steinschlagschutzlacke, Unterbodenschutzlacke und Reparaturlacke. Im Bereich der Bautenlacke greift man häufig auf seit langem bekannte, etablierte lösemittelhaltige Lacksysteme zurück. Diese Lacksysteme unterscheiden sich regelmäßig aufgrund ihrer unterschiedlichen Zielsetzungen in ihrer Zusammensetzung von den sogenannten Industrielacken. Während mit Bautenlacken zumeist dekorative Zwecke verfolgt werden, haben Industrielacke vorrangig eine Schutzfunktion für die beschichteten Systeme wahrzunehmen, beispielsweise hinsichtlich Korrosionsschutz und Chemikalienbeständigkeit.

Viele Lacke, insbesondere auch Alkydharz-Systeme neigen beim Einsatz in Innenräumen zur Dunkelvergilbung. Zuweilen wird auch Hellvergilbung beobachtet. Die Hellvergilbung ist die Vergilbung unter Lichteinwirkung. Bei der Dunkelvergilbung kommt es zu einer Gelbverfärbung von ursprünglich weißen Lacken.

Aus der DE 197 07 733 B4 gehen, Reaktionslacke zum Lackieren von Metallen, wie sie beim Automobilbau und in der Industrie Verwendung finden, hervor. Gemäß dieser Druckschrift soll es durch den Einsatz spezifischer Polyesterpolyole gelingen, i) den Lösungsmittelbedarf bei Reaktionslacken herabzusetzen, ii) mit Polyisocyanaten vernetzbare Klarlacke wie auch pigmentierte Reaktionslacke verfügbar zu machen und iii) Lackbeschichtungen zu liefern, die Wetterbeständigkeit sind und sich durch einen hohen Glanz auszeichnen. Auch sollen die zugrunde liegenden lösemittelhaltigen Lacksysteme über keine Eigenfarbe verfügen. Hierbei haben die Polyesterpolyole Hydroxylzahlen im Bereich von 80 bis 300, Säurezahlen im Bereich von 5 bis 30 und Molmassen im Bereich von 700 bis 15000 aufzuweisen und aufgebaut zu sein aus Umsetzungsprodukten von a) 5 bis 50 Mol.-% Neopentylglykol, b) 5 bis 45 Mol.-% Trimethylolpropan, c) 20 bis 51,5 Mol.-% Hexahydrophtalsäure und d) 0,5 bis 32 Mol.-% Phthalsäure.

Die JP 2013/023478 A betrifft eine Behandlungszusammensetzung, die mindestens ein Silikon mit einer quaternären Ammoniumgruppe und mindestens ein silyliertes Harz auf Urethanbasis enthält und über einen pH-Wert im Bereich von 2 bis 9 verfügt. Mit diesen Behandlungszusammensetzungen soll sich besonders gut ein Retentionseffekt bei der Haarbehandlung einstellen, wodurch dem Haar Elastizität verliehen werden soll.

Aus der EP 2 617 778 A1 geht eine Zusammensetzung zur Verwendung bei der Herstellung einer Beschichtung zum Ablösen von Verschmutzungen hervor, umfassend mindestens ein härtbares oder vernetzbares Polysiloxan und mindestens ein Polyurethan mit Silan-Endgruppen. Mit diesen Zusammensetzungen sollen sich bestehende Antifouling- oder Fouling-Release-Beschichtungen direkt ohne Auftragen einer weiteren Verbindungsschicht überstreichen lassen. Dies soll durch die Zugabe eines silanterminierten Polyurethans zu der Fouling-Release-Zusammensetzung vor dem Aushärten gelingen.

Der vorliegenden Erfindung lag die Aufgabe zugrunde, solche Lacksysteme zu finden, die als dekorative Bauten- oder Klarlacke verwendet werden können und die sich auf vielfältige Weise einfärben lassen. Ferner lag der Erfindung insbesondere auch die Aufgabe zugrunde, Bautenlacke und Klarlacke verfügbar zu machen, die ohne zeitlichen Mehraufwand, vorzugsweise innerhalb eines Arbeitstages, auch mehrlagig applizierbar sind. Außerdem lag der Erfindung die Aufgabe zugrunde, solche Bauten- und Klarlacke zur Verfügung zu stellen, die hinsichtlich Umwelt- und Arbeitssicherheit unbedenklich sind.

Demgemäß wurde eine lösemittelhaltige Zusammensetzung für ein 2K-Beschichtungssystem gefunden, bestehend aus oder umfassend
a) ein Bindemittel, umfassend oder bestehend aus mindestens einem silanfunktionalisierten Polyurethan, wobei das silanfunktionalisierte Polyurethan ein Polyurethan-Alkydharz oder ein Polyurethan-Carbonat darstellt,
b) mindestens einen bei 20 °C flüssigen aliphatischen Kohlenwasserstoff als Kohlenwasserstoff-Lösemittel und
c) mindestens ein bei 20 °C flüssiges Glykolether-Lösemittel, wobei
das Gewichtsverhältnis von Kohlenwasserstoff-Lösemittel b) zu Glykolether-Lösemittel c) mindestens 1 : 0,75 und höchstens 1 : 0,9 beträgt.

Die erfindungsgemäße lösemittelhaltige Zusammensetzung stellt zweckmäßigerweise eine Komponente eines zweikomponentigen Beschichtungs- bzw. Lacksystems dar, das, gibt man die beiden Komponenten zusammen, einen ausgehärteten bzw. aushärtenden Lackfilm, im vorliegenden Fall Bautenlack oder auch Klarlack, ausbildet. Als weitere Komponente dieses Beschichtungssystems wird vorzugsweise auf Vernetzungskatalysatoren zurückgegriffen werden.

Zweckmäßige Glykolether-Lösemittel in Bezug auf den flüssigen Glykolether stellen insbesondere 1-Methoxy-2-propanol, 2-Butoxyethanol, Di(propylenglycol)dimethylether, Methoxybutanol, Butylglykol, 2-(2-Butoxyethoxy)ethanol) und/oder Dipropylenglycolmonomethylether dar. Besonders geeignete Glykolether-Lösemittel können dabei z.B. ausgewählt werden aus der Gruppe bestehend aus 1-Methoxy-2-propanol, 2-Butoxyethanol, Di(propylenglycol)dimethylether, Methoxybutanol, 2-(2-Butoxyethoxy)ethanol), Dipropylenglycolmonomethylether und beliebigen Mischungen hiervon. Bevorzugt wird auf Dipropylenglycolmonomethylether, 1-Methoxy-2-propanol, Butylglykol und/oder und besonders bevorzugt auf 1-Methoxy-2-propanol und/oder Dipropylenglycolmonomethylether zurückgegriffen. Besonders bevorzugt werden Glykolether-Lösemittel eingesetzt, deren Flammpunkt, bestimmt nach ASTMD3278 zwischen 30°C und 85°C liegt. Ganz besonders bevorzugt wird auf 1-Methoxy-2-propanol und/oder Dipropylenglycolmonomethylether zurückgegriffen, wobei Dipropylenglykolmonomethylether insbesondere bevorzugt ist.

Gute Trocknungseigenschaften sowie eine ebenfalls gute Durchtrocknung der mit den erfindungsgemäßen 2K-Beschichtungs- bzw. Lacksystemen erhaltenen Beschichtungen erhält man insbesondere bei Verwendung des flüssigen Glykolether-Lösemittels c) in Mengen im Bereich von insbesondere 3 bis 30 Gew.-% und bevorzugt 5 bis 25 Gew.-%.

Besonders geeignet ist der Anteil an aromatenhaltigen Kohlenwasserstoffen, Ketonen und/oder Estern in den erfindungsgemäßen Zusammensetzungen, bezogen auf das Gesamtgewicht dieser Zusammensetzung, kleiner oder gleich 0,5 Gew.-%, bevorzugt kleiner oder gleich 0,3 Gew.-% und besonders bevorzugt kleiner oder gleich 0,1 Gew.-%. Die erfindungsgemäßen 2K-Beschichtungs- bzw. Lacksysteme zeichnen sich in einer bevorzugten Ausführungsform auch dadurch aus, dass das Lösemittel im Wesentlichen keine, vorzugsweise keine aromatenhaltigen Kohlenwasserstoffe, keine Ketone und/oder keine Ester und insbesondere keine aromatenhaltigen Kohlenwasserstoffe, keine Ketone und keine Ester enthält.

Geeignete flüssige aliphatische Kohlenwasserstoffe umfassen dabei z.B. n-Alkane und iso-Alkane ebenso wie Paraffine und Naphthene sowie Gemische dieser Verbindungen, beispielsweise 15 bis 50 Gew.-%, bevorzugt 20 bis 45 Gew.-%, z.B. 40 oder 27 Gew.-%, Paraffine und 50 bis 85 Gew.-%, bevorzugt 55 bis 80 Gew.-%, z.B. 60 bzw. 73 Gew.-%, Naphthene. Die Menge an flüssigen aliphatischen Kohlenwasserstoffen als Lösemittelbestandteil liegt üblicherweise im Bereich von 3 bis 45 Gew.-% und bevorzugt im Bereich von 5 bis 25 Gew.-%. %, jeweils bezogen auf das Gesamtgewicht des erfindungsgemäßen 2K-Beschichtungs- bzw. Lacksystems. Bevorzugt finden flüssige aliphatische Kohlenwasserstoffe mit einem Flammpunkt zwischen 35°C und 79 °C Verwendung. Bei Einsatz von flüssigen aliphatischen Kohlenwasserstoffen in den vorangehend genannten Bereichen erhält man üblicherweise gute Trocknungseigenschaften sowie eine ebenfalls gute Durchtrocknung der erhaltenen Beschichtungen.

Für viele Anwendungen hat es sich als zweckmäßig erwiesen, die Gesamtmenge an Lösemittel im Bereich von 12 bis 55 Gewichtsprozent und bevorzugt im Bereich von 15 bis 45 Gewichtsprozent, besonders bevorzugt 20 bis 40 Gewichtsprozent bezogen auf das Gesamtgewicht des erfindungsgemäßen 2K-Beschichtungs- bzw. Lacksystems, zu wählen.

In weiteren besonders zweckmäßigen Ausführungsformen sind die erfindungsgemäßen 2K-Beschichtungs- bzw. Lacksysteme im Wesentlichen frei von Sikkativen, insbesondere im Wesentlichen frei von Metallsalzsikkativen. Alternativ und insbesondere zusätzlich können die erfindungsgemäßen 2K-Beschichtungs- bzw. Lacksysteme auch im Wesentlichen frei von Hautverhinderungsmitteln, insbesondere Oxim-Hautverhinderungsmitteln, sein.

Für die Herstellung der, insbesondere feuchtigkeitshärtenden, silanfunktionalisierten Polyurethane wird bevorzugt auf Diisocyanate, Polyole und Alkoxysilane zurückgegriffen.

Geeignete Diisocyanate können hierbei insbesondere ausgewählt werden aus der Gruppe bestehend aus 2,2,4-Trimethylhexandiisocyanat (TMDI), Isophorondiisocyanat (IPDI) und deren beliebige Mischungen.

Unter den Polyolen sind lineare Polyole bevorzugt. Geeignete Polyole können dabei ausgewählt werden aus der Gruppe bestehend aus Alkydharzen, Polyestern, Polycarbonatdiolen, Silanolen, Acrylaten und deren beliebigen Mischungen. Die Alkyharzkomponente des Polyurethan-Alkydharzes basiert in einer besonders vorteilhaften Ausgestaltung der Erfindung im Wesentlichen ausschließlich auf Fettsäuren, die im Wesentlichen frei von Doppelbindungen sind, insbesondere auf Palmitin-, Laurin-, Myristin-, Stearin-, Capryl- und/oder Caprinsäure.

Unter den Alkoxysilanen sind die Trialkoxysilane und die alkoxylierten Aminosilane bevorzugt. Geeignete Alkoxysilane umfassen dabei z.B. Ethoxysilane, insbesondere Triethoxysilan. Als geeignete alkoxylierte Aminosilane kommen insbesondere ethoxylierte Aminosilane zum Einsatz, wobei triethoxylierte Aminosilane besonders bevorzugt sind. Mit der Verwendung der ethoxylierten Silane und der ethoxylierten Aminosilane geht der Vorteil einher, dass bei der Aushärtungsreaktion kein Methanol freigesetzt wird, welches für die menschliche Gesundheit und auch umwelttoxisch bedenklich ist.

Geeignete erfindungsgemäße Zusammensetzungen umfassen in einer geeigneten Ausgestaltung ferner mindestens ein Pigment d) sowie in einer weiteren vorteilhaften Ausführungsform neben dem mindesten einen Pigment d) mindestens ein Mattierungsmittel e), mindestens einen Füllstoff f), insbesondere Silikate, mindestens ein Netzmittel g) und/oder mindestens ein Korrosionsschutzpigment h) sowie bevorzugt mindestens ein Mattierungsmittel e), mindestens einen Füllstoff f), insbesondere Silikate, mindestens ein Netzmittel g) und mindestens ein Korrosionsschutzpigment h). In den vorgenannten Ausgestaltungen bildet die erfindungsgemäße Zusammensetzung bevorzugt die Komponente eines 2K-Beschichtungssystems für einen Bautenlack.

In einer alternativen, ebenfalls sehr zweckmäßigen Ausführungsform ist erfindungsgemäße Zusammensetzung im Wesentlichen frei von Pigmenten und in einer weiteren Ausführungsform im Wesentlichen frei von Pigmenten und auch im Wesentlichen frei von Füllstoffen. In den vorgenannten Ausgestaltungen bildet die erfindungsgemäße Zusammensetzung bevorzugt die Komponente eines 2K-Beschichtungssystems für einen Klarlack.

Der Feststoffanteil des Bindemittels (Komponente a)), bezogen auf das Gesamtgewicht der erfindungsgemäßen Zusammensetzung liegt bevorzugt im Bereich von 25 bis 55 Gewichtsprozent und bevorzugt im Bereich von 30 bis 50 Gewichtsprozent.

Für die Aushärt- bzw. Vernetzungsreaktion des, insbesondere feuchtigkeitshärtenden, silanfunktionalisierten Polyurethans kommt vorzugsweise mindestens ein Vernetzungskatalysator zum Einsatz kommen. Besonders geeignete Vernetzungskatalysatoren können dabei ausgewählt werden aus der Gruppe bestehend aus Säuren, metallorganischen Verbindungen, Sulfonaten, Titanaten, Aminen und deren beliebigen Mischungen. Hierunter sind Säuren, Sulfonate, Titanate und Amine besonders geeignet.

Unter den Säuren wird bevorzugt zurückgegriffen auf Dinonylnaphthalendisulfonsäure, Dinonylnaphthalensulfonsäure, Dodecylbenzolsulfonsäure, para-Toluolsulfonsäure, Bis(2-ethylhexyl)phosphat oder deren beliebige Mischungen.

Die Menge des Feststoffanteils des Vernetzungskatalysators kann abhängig vom Silan-Anteil im Bindemittel in weiten Bereichen variieren. In einer möglichen Ausgestaltung kann die Menge des Feststoffanteils des Vernetzungskatalysators z.B. im Bereich von 0,5 bis 8,0 Gewichtsprozent oder im Bereich von 0,8 bis 6,0 oder auch im Bereich von 1,0 bis 5,0 Gewichtsprozent liegen, jeweils bezogen auf den Feststoffanteil des silanfunktionalisierten Polyurethan-Bindemittels. Alternativ oder zusätzlich kann die Menge an Vernetzungskatalysator auch auf das Gesamtgewicht des erfindungsgemäßen 2K-Beschichtungssystems bzw. Lacksystems bezogen werden und kann hierbei in einer möglichen Ausgestaltung im Bereich von 0,1 bis 2,0 Gewichtsprozent oder im Bereich von 0,2 bis 1,5 Gewichtsprozent oder auch im Bereich von 0,4 bis 1,0 Gewichtsprozent liegen.

Die Mattierungsmittel des erfindungsgemäßen Lacksystems sind bevorzugt ausgewählt aus der Gruppe bestehend aus Wachsen, pyrogener Kieselsäure, gefällter Kieselsäure, mit Wachs nachbehandelten gefällten Kieselsäuren, mit Wachs nachbehandelten pyrogenen Kieselsäuren und deren beliebigen Mischungen, wobei pyrogene Kieselsäure, gefällte Kieselsäure und deren beliebige Mischungen bevorzugt sind.

Ein besonders geeignetes Pigment für die erfindungsgemäße lösemittelhaltige Zusammensetzung stellt Titandioxid, insbesondere Rutil, dar. Alternativ oder zusätzlich können auch anorganische Buntpigmente und/oder organische Buntpigmente verwendet werden.

Solches Titandioxid, insbesondere Rutil, ist dabei besonders bevorzugt, das keiner organischen Nachbehandlung unterzogen wurde. Alternativ kann aber auch Titandioxid, insbesondere Rutil, zum Einsatz kommen, das mindestens einer anorganischen Nachbehandlung, und besonders bevorzugt keiner organischen Nachbehandlung, unterzogen wurde. Eine bevorzugte anorganische Nachbehandlung liefert dabei Titandioxid, insbesondere Rutil, das mit Aluminiumoxid und/oder Siliziumdioxid und/oder Zirkonoxid beschichtet ist. Besonders geeignetes Titandioxid, insbesondere Rutil, ist solches, das ohne Mahlhilfsmittel erhalten wurde. Grundsätzlich ist für das erfindungsgemäße Lacksystem Titandioxid, insbesondere Rutil, bevorzugt, das nach dem Chloridverfahren erhalten wurde. In besonders zweckmäßigen Ausführungsformen wird nach dem Chloridverfahren hergestelltes Titandioxid, insbesondere Rutil, eingesetzt, das über eine anorganische Nachbehandlung mit einer Beschichtung versehen wurde, welche Al₂O₃ und SiO₂ umfasst. Besonders bevorzugt enthält diese Beschichtung kein ZrO₂. In den vorangehend genannten Systemen liegt der Anteil an Titandioxid regelmäßig bei oder oberhalb von 82 Gewichtsprozent, bevorzugt bei oder oberhalb 84 Gewichtsprozent und besonders bevorzugt bei oder oberhalb von 86 Gewichtsprozent, der Anteil an Al₂O₃ regelmäßig bei oder unterhalb von 7 Gewichtsprozent, bevorzugt bei oder unterhalb von 6 Gewichtsprozent und besonders bevorzugt bei oder unterhalb von 5 Gewichtsprozent, sowie der Anteil von SiO₂ regelmäßig bei oder unterhalb von 11 Gewichtsprozent, bevorzugt bei oder unterhalb von 10 Gewichtsprozent und besonders bevorzugt bei oder unterhalb von 9 Gewichtsprozent, wobei die Anteile sich jeweils zu 100,0 Gewichtsprozent ergänzen. Bei Verwendung der vorangehend genannten bevorzugten Ausführungsformen an beschichtetem Titandioxid erhält man nicht nur besonders gut trocknende Lackbeschichtungen, sondern auch solche, die sich durch eine ausgeprägte Ritzhärte, Pendelhärte und Buchholzhärte auszeichnen. Überdies liefern die mit den vorangehend genannten beschichteten Titandioxidspezies ausgestatteten erfindungsgemäßen 2K-Beschichtungs- bzw. Lacksysteme äußerst witterungsbeständige Lackbeschichtungen.

Exemplarisch seien als geeignete weitere Pigmente anorganische Pigmente wie Bunt-, Schwarz- und Weißpigmente (Farbpigmente) sowie Effektpigmente und organische Pigmente wie Bunt- und Schwarzpigmente genannt.

Als geeignete anorganische Weißpigmente kommen alternativ oder zusätzlich zu dem vorangehend geschilderten Titandioxid zum Beispiel Zinksulfid, Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß.

Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarin-violett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat.

Besonders geeignete Pigmente umfassen zum Beispiel Titandioxid, Zinksulfid, Baryt, Ruß, Eisenoxid, Chromoxid, Kobaltblau, Spinellpigment, Nickeltitanat, Chromtitanat und deren beliebige Mischungen.

Als geeignete organische Buntpigmente kann zum Beispiel zurückgegriffen werden auf C.I. Pigment Blue 15, C.I. Pigment Blue 15:1, C.I. Pigment Blue,15:2, C.I. Pigment Blue 15:3, C.I. Pigment Blue 15:4, C.I. Pigment Blue 15:6, C.I Pigment Blue 16, C.I. Pigment Green η, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254, C.I. Pigment Red 264, C.I. Pigment Red 282, C.I. Pigment Violett 19, C.I. Pigment Violett 23, Pigment Yellow 74, Pigment Yellow 83, Pigment Yellow 97, C.I. Pigment Yellow 110, C.I. Pigment Yellow 138, C.I. Pigment Yellow 154 oder beliebige Mischungen dieser Pigmente.

Geeignete organische Pigmente können hierbei z.B. ausgewählt werden aus der Gruppe bestehend aus Monoazopigmenten, insbesondere C.I. Pigment Braun 25, C.I. Pigment Orange 5, 13, 38, oder 64, C.I. Pigment Rot 1, 2, 3, 4, 5, 8, 9,12, 17, 22, 23, 31, 48: 1, 48: 2, 48: 3, 49, 51: 1, 52: 1, 52: 2, 53, 53: 1, 53: 3, 57: 1, 58: 2, 58: 4, 112, 146, 148, 170, 175, 184, 185, 187, 191: 1, 208, 210, 245, 247 und/oder 251, C.I. Pigment Gelb 1, 3, 62, 73, 120, 151, 181, 183 und/oder 191 und/oder C.I. Pigment Violett 32, Diazopigmenten, insbesondere C.I. Pigment Orange 16, 34, 44 und/oder 72 und/oder C.I. Pigment Gelb 12, 13, 14, 16, 17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder C.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 270 und/oder 272, Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109, 139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129, 151, 153 und/oder 177 und/oder C.I. Pigment Grün 8, Perinonpigmenten, insbesondere C.I. Pigment Orange 43, und/oder C.I. Pigment Rot 19,4, Perylenpigmenten, insbesondere C.I. Pigment Schwarz 31 und/oder C.I. Pigment Schwarz 32, C.I. Pigment Rot 123, 149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251, Thioindigopigmenten, insbesondere C.I. Pigment Rot 88 und/oder 181 und/oder C.I. Pigment Violett 38, Triarylcarboniumpigmenten, insbesondere C.I. Pigment Blau 1, 61 und/oder 62 und/oder C.I. Pigment Grün 1 und/oder C.I. Pigment Rot 81, 81: 1 und/oder 169 und/oder C.I. Pigment Violett 1, 2, 3 und/oder 27.

Geeignete Pigmentmischungen können sowohl Mischungen aus anorganischen und organischen Pigmenten, als auch Mischungen aus unterschiedlichen anorganischen Pigmenten sowie Mischungen aus unterschiedlichen organischen Pigmenten umfassen.

Die erfindungsgemäße Zusammensetzung kann darüber hinaus ausgestattet sein mit mindestens einem Füllstoff, insbesondere Silikaten, und/oder mindestens einem Netzmittel und/oder mindestens einem Korrosionsschutzpigment. Geeignete silikatische Füllstoffe umfassen z.B. Quarzite, Schichtsilikate, Feldspate, Vulkanite und/oder Kieselerden wie Kieselgur und Diatomeenerden. Werden Schichtsilikate als Füllstoffe eingesetzt, handelt es sich hierbei in der Regel um solche, in die Wasser unter Normaldruck- und Raumtemperaturbedingungen nicht eingelagert wird und die demgemäß nicht als Verdicker fungieren können.

Die erfindungsgemäßen Zusammensetzungen finden insbesondere als Komponente eines 2 K-Bautenlacks oder eines 2 K-Klarlacks Verwendung.

Die der Erfindung zugrunde liegende Aufgabe wird des Weiteren gelöst durch ein 2K-Beschichtungssystem, umfassend mindestens eine erfindungsgemäße lösemittelhaltige Zusammensetzung und mindestens einen Vernetzungskatalysator für die Vernetzung des silanfunktionalisierten Polyurethans. Hierbei ist das silanfunktionalisierte Polyurethan zweckmäßigerweise in Gegenwart von dem mindestens einen Vernetzungskatalysator aushärtbar.

Bevorzugt wird für die erfindungsgemäßen 2K-Beschichtungssysteme auf Vernetzungskatalysatoren zurückgegriffen, die ausgewählt sind aus der Gruppe bestehend aus Säuren, Sulfonaten, Titanaten, Aminen und deren beliebigen Mischungen, wobei Säuren als Vernetzungskatalysatoren bevorzugt sind.

Für viele Anwendungen hat es sich als vorteilhaft erwiesen, dass der mindestens eine Vernetzungskatalysator, insbesondere die mindestens eine Säure, in dem Glykolether-Lösemittel c) vorliegend bzw. aufgenommen in dem Glykolether-Lösemittel c) der erfindungsgemäßen Zusammensetzung zugegeben wird. Bevorzugt wird hierfür auf 1-Methoxy-2-propanol und/oder Dipropylenglycolmethylether, insbesondere Dipropylenglycolmethylether, zurückgegriffen. Mit der vorangehend geschilderten Verfahrensvariante gelingt regelmäßig eine stippenfreie Einarbeitung in das Lacksystem besonders einwandfrei.

Mit der vorliegenden Erfindung geht die überraschende Erkenntnis einher, insbesondere durch Verwendung von aufeinander abgestimmten Löse- und Bindemitteln einen schnelltrocknenden sowie geruchs- und vergilbungsarmen 2K-Bautenlack und auch 2K-Klarlack zugänglich gemacht zu haben, der sich durch eine hohe Kratzfestigkeit und mechanische Beständigkeit auszeichnet. Auch lassen sich bei Verwendung der erfindungsgemäßen Zusammensetzungen bzw. 2K-Beschichtungssysteme die Arbeitszyklen verkürzen. Denn bei mehrmaligem Beschichtungsauftrag kann frühzeitiger mit der Applikation der nachfolgenden Beschichtungslage begonnen werden. Von Vorteil ist ebenfalls, dass sich die zugrunde liegende lösemittelhaltige Zusammensetzung ebenso gut und unproblematisch wie zum Beispiel herkömmliche lösemittelhaltige Alkydharzlacke verarbeiten lässt. Vorteilhaft es insbesondere auch, dass die erfindungsgemäßen Zusammensetzungen bzw. Lackkomponenten nicht auf aromatenhaltige Lösemittel angewiesen sind und zudem ohne Keton- und Ester-Lösungsmittel auskommen können. Überdies kann auf ansonsten für Lacksysteme übliche Inhaltsstoffe wie Metallsalze und Oxime verzichtet werden. Auch kann Methanol als Abspaltprodukt bei der Aushärtreaktion vermieden werden, ohne Beeinträchtigungen des Eigenschaftsprofils der erhaltenen Bautelacke in Kauf nehmen zu müssen. Ferner hat sich gezeigt, dass die Oberflächen der mit den erfindungsgemäßen Zusammensetzungen bzw. Lacksysteme erhältlichen Beschichtungen einen sehr guten Verlauf, eine hohe Filmhärte, eine gute Chemikalienbeständigkeit und eine ausgesprochen gute Witterungsbeständigkeit aufweisen. Schließlich besitzen die mit den erfindungsgemäßen Lacksystemen erhältlichen Lackbeschichtungen eine geringe Vergilbungstendenz und zeichnen sich demgemäß durch eine Langzeitbeständigkeit gegen Dunkel- und Hellvergilbung aus.

## Patentansprüche

1. Lösemittelhaltige Zusammensetzung für ein 2K-Beschichtungssystem, bestehend aus oder umfassend
a) ein Bindemittel, umfassend oder bestehend aus mindestens einem silanfunktionalisierten Polyurethan, wobei das silanfunktionalisierte Polyurethan ein Polyurethan-Alkydharz oder ein Polyurethan-Carbonat darstellt,
b) mindestens einen bei 20 °C flüssigen aliphatischen Kohlenwasserstoff als Kohlenwasserstoff-Lösemittel und
c) mindestens ein bei 20 °C flüssiges Glykolether-Lösemittel, wobei
das Gewichtsverhältnis von Kohlenwasserstoff-Lösemittel b) zu Glykolether-Lösemittel c) mindestens 1 : 0,75 und höchstens 1 : 0,9 beträgt.

2. Zusammensetzung nach Anspruch 1, ferner umfassend
mindestens ein Pigment d) und gegebenenfalls mindestens ein Mattierungsmittel e), gegebenenfalls mindestens einen Füllstoff f), insbesondere Silikate, gegebenenfalls mindestens ein Netzmittel g) und/oder gegebenenfalls mindestens ein Korrosionsschutzpigment h),
oder **dadurch gekennzeichnet, dass** diese im Wesentlichen frei von Pigmenten und gegebenenfalls frei von Füllstoffen ist.

3. Zusammensetzung nach Anspruch 1 oder 2, **dadurch gekennzeichnet, dass** das silanfunktionalisierte Polyurethan gebildet ist aus Diisocyanaten, insbesondere 2,2,4-Trimethylhexandiisocyanat (TMDI) und/oder Isophorondiisocyanat (IPDI), Polyolen und Alkoxysilanen.

4. Zusammensetzung nach einem der vorangehenden Ansprüche, **dadurch gekennzeichnet, dass**
die Alkydharzkomponente des Polyurethan-Alkydharzes im Wesentlichen ausschließlich auf Fettsäuren basiert, die im Wesentlichen frei von Doppelbindungen sind, insbesondere auf Palmitin-, Laurin-, Myristin-, Stearin-, Capryl- und/oder Caprinsäure.

5. Zusammensetzung nach Anspruch 3 oder 4, **dadurch gekennzeichnet, dass**
die Polyole lineare Polyole darstellen und/oder ausgewählt sind aus der Gruppe bestehend aus Alkydharzen, Polyestern, Polycarbonatdiolen, Silanolen, Acrylaten und deren beliebigen Mischungen und/oder dass
die Alkoxysilane, insbesondere Ethoxysilane, Trialkoxysilane, insbesondere Triethoxysilane, und/oder alkoxylierte Aminosilane, bevorzugt ethoxylierte Aminosilane und besonders bevorzugt triethoxylierte Aminosilane, umfassen oder darstellen.

6. Zusammensetzung nach einem der Ansprüche 2 bis 5, **dadurch gekennzeichnet, dass**
das Mattierungsmittel e) ausgewählt ist aus der Gruppe bestehend aus Wachsen, pyrogener Kieselsäure, gefällter Kieselsäure, mit Wachs nachbehandelte gefällte Kieselsäuren, mit Wachs nachbehandelte pyrogene Kieselsäuren und deren beliebigen Mischungen und/oder dass
das Pigment d) ausgewählt ist aus Titandioxid, insbesondere Rutil, anorganischen Buntpigmenten, organischen Buntpigmenten und deren beliebigen Mischungen.

7. Zusammensetzung nach Anspruch 6, **dadurch gekennzeichnet, dass** das Titandioxid, insbesondere Rutil, keiner organischen Nachbehandlung unterzogen wurde und/oder mindestens einer anorganischen Nachbehandlung unterzogen wurde, insbesondere mit Aluminiumoxid und/oder Siliziumdioxid und/oder Zirkonoxid beschichtet ist, und/oder ohne Mahlhilfsmittel erhalten wurde und/oder nach dem Chloridverfahren erhalten wurde.

8. Zusammensetzung nach einem der vorangehenden Ansprüche, **dadurch gekennzeichnet, dass**
der Anteil an aromatenhaltigen Kohlenwasserstoffen, Ketonen und/oder Estern, bezogen auf das Gesamtgewicht der Zusammensetzung, kleiner oder gleich 0,5 Gew.-%, bevorzugt kleiner oder gleich 0,3 Gew.-% und besonders bevorzugt kleiner oder gleich 0,1 Gew.-% ist.

9. Zusammensetzung nach einem der vorangehenden Ansprüche, **dadurch gekennzeichnet, dass**
das Kohlenwasserstoff-Lösemittel im Wesentlichen keine aromatenhaltigen Kohlenwasserstoffe, keine Ketone und/oder keine Ester enthält, insbesondere keine aromatenhaltigen Kohlenwasserstoffe, Ketone und Ester, und/oder dass diese Zusammensetzung im Wesentlichen frei von Sikkativen, insbesondere im Wesentlichen frei von Metallsalzsikkativen, und/oder im Wesentlichen frei von Hautverhinderungsmitteln, insbesondere Oxim-Hautverhinderungsmitteln, ist.

10. Zusammensetzung nach einem der vorangehenden Ansprüche, **dadurch gekennzeichnet, dass**
das Glykolether-Lösemittel c) ausgewählt ist aus der Gruppe bestehend aus 1-Methoxy-2-propanol, 2-Butoxyethanol, Di(propylenglycol)dimethylether, Methoxybutanol, 2-(2-Butoxyethoxy)ethanol), Dipropylenglycolmonomethylether und beliebigen Mischungen hiervon, bevorzugt Dipropylenglycolmonomethylether und/oder 1-Methoxy-2-propanol, und besonders bevorzugt Dipropylenglykolmonomethylether, umfasst oder darstellt.

11. 2K-Beschichtungssystem, umfassend
mindestens eine Zusammensetzung gemäß einem der vorangehenden Ansprüche und mindestens einen Vernetzungskatalysator für die Vernetzung des silanfunktionalisierten Polyurethans.

12. 2K-Beschichtungssystem nach Anspruch 11, **dadurch gekennzeichnet, dass** das silanfunktionalisierte Polyurethan in Gegenwart von dem mindestens einem Vernetzungskatalysator aushärtbar ist.

13. 2K-Beschichtungssystem nach Anspruch 11 oder 12, **dadurch gekennzeichnet, dass**
der Vernetzungskatalysator ausgewählt ist aus der Gruppe bestehend aus Säuren, Sulfonaten, Titanaten, Aminen und deren beliebigen Mischungen, insbesondere Säuren umfasst.

14. 2K-Beschichtungssystem nach Anspruch 13, **dadurch gekennzeichnet, dass**
die Säuren ausgewählt sind aus der Gruppe bestehend aus Dinonylnaphthalendisulfonsäure, Dinonylnaphthalensulfonsäure, Dodecylbenzolsulfonsäure, para-Toluolsulfonsäure, Bis(2-ethylhexyl)hydrogenphosphat und deren beliebigen Mischungen umfassen.

15. Verwendung der Zusammensetzung gemäß einem der Ansprüche 1 bis 10 als Komponente eines 2K-Beschichtungssystems für einen Bautenlack oder für einen Klarlack.

16. Verwendung des 2K-Beschichtungssystems nach einem der Ansprüche 11 bis 14 als Bautenlack oder als Klarlack.

## Claims

1. A solvent-containing composition for a 2K coating system consisting of or comprising
a) a binder comprising or consisting of at least one silane-functionalised polyurethane, wherein the silane-functionalised polyurethane is a polyurethane alkyd resin or a polyurethane carbonate,
b) at least one aliphatic hydrocarbon liquid at 20 °C as hydrocarbon solvent and
c) at least one glycol ether solvent liquid at 20 °C, wherein
the weight ratio of hydrocarbon solvent b) to glycol ether solvent c) is at least 1:0.75 and at most 1:0.9.

2. The composition according to claim 1, further comprising
at least one pigment d) and optionally at least one matting agent e), optionally at least one filler f), in particular silicates, optionally at least one wetting agent g) and/or optionally at least one anti-corrosion pigment h),
or **characterised in that** it is substantially free of pigments and optionally free of fillers.

3. The composition according to claim 1 or 2, **characterised in that**
the silane-functionalised polyurethane is formed from diisocyanates, in particular 2,2,4-trimethylhexane diisocyanate (TMDI) and/or isophorone diisocyanate (IPDI), polyols and alkoxysilanes.

4. The composition according to any one of the preceding claims, **characterised in that** the alkyd resin component of the polyurethane alkyd resin is based essentially exclusively on fatty acids which are essentially free of double bonds, in particular palmitic, lauric, myristic, stearic, caprylic and/or capric acid.

5. The composition according to claim 3 or 4, **characterised in that**
the polyols are linear polyols and/or are selected from the group consisting of alkyd resins, polyesters, polycarbonate diols, silanols, acrylates and any mixtures thereof and/or **in that**
the alkoxysilanes comprise or are, in particular ethoxysilanes, trialkoxysilanes, in particular triethoxysilanes, and/or alkoxylated aminosilanes, preferably ethoxylated aminosilanes and particularly preferably triethoxylated aminosilanes.

6. The composition according to any one of claims 2 to 5, **characterised in that** the matting agent e) is selected from the group consisting of waxes, fumed silica, precipitated silica, precipitated silicas after-treated with wax, fumed silicas after-treated with wax and any mixtures thereof and/or **in that**
the pigment d) is selected from titanium dioxide, in particular rutile, inorganic coloured pigments, organic coloured pigments and any mixtures thereof.

7. The composition according to claim 6, **characterised in that**
the titanium dioxide, in particular rutile, has not been subjected to any organic aftertreatment and/or has been subjected to at least one inorganic aftertreatment, in particular is coated with aluminium oxide and/or silicon dioxide and/or zirconium oxide, and/or has been obtained without grinding aids and/or has been obtained by the chloride process.

8. The composition according to any one of the preceding claims, **characterised in that** the proportion of aromatic-containing hydrocarbons, ketones and/or esters, based on the total weight of the composition, is less than or equal to 0.5% by weight, preferably less than or equal to 0.3% by weight and particularly preferably less than or equal to 0.1% by weight.

9. The composition according to any one of the preceding claims, **characterised in that** the hydrocarbon solvent contains substantially no aromatic-containing hydrocarbons, no ketones and/or no esters, in particular no aromatic-containing hydrocarbons, ketones and esters, and/or
**in that** this composition is substantially free of siccatives, in particular substantially free of metal salt siccatives, and/or substantially free of skin-preventing agents, in particular oxime skin-preventing agents.

10. The composition according to any one of the preceding claims, **characterised in that** the glycol ether solvent c) is selected from the group consisting of 1-methoxy-2-propanol, 2-butoxyethanol, di(propylene glycol) dimethyl ether, methoxybutanol, 2-(2-butoxyethoxy)ethanol, dipropylene glycol monomethyl ether and any mixtures thereof, preferably dipropylene glycol monomethyl ether and/or 1-methoxy-2-propanol, and particularly preferably comprises or is dipropylene glycol monomethyl ether.

11. A 2K coating system comprising
at least one composition according to any one of the preceding claims and at least one crosslinking catalyst for the crosslinking of the silane-functionalised polyurethane.

12. The 2K coating system according to claim 11, **characterised in that**
the silane-functionalised polyurethane is curable in the presence of the at least one crosslinking catalyst.

13. The 2K coating system according to claim 11 or 12, **characterised in that**
the crosslinking catalyst is selected from the group consisting of acids, sulfonates, titanates, amines and any mixtures thereof, in particular comprises acids.

14. The 2K coating system according to claim 13, **characterised in that**
the acids are selected from the group consisting of dinonylnaphthalenedisulfonic acid, dinonylnaphthalenesulfonic acid, dodecylbenzenesulfonic acid, paratoluenesulfonic acid, bis(2-ethylhexyl) hydrogen phosphate and comprise any mixtures thereof.

15. The use of the composition according to any one of claims 1 to 10 as a component of a 2K coating system for an architectural varnish or for a clear varnish.

16. The use of the 2K coating system according to any one of claims 11 to 14 as architectural varnish or as clear varnish.

## Revendications

1. Composition contenant un solvant pour un système de revêtement 2K consistant en ou comprenant
a) un liant comprenant ou consistant en au moins un polyuréthane fonctionnalisé par un silane, le polyuréthane fonctionnalisé par un silane étant une résine alkyde de polyuréthane ou un carbonate de polyuréthane,
b) au moins un hydrocarbure aliphatique liquide à 20 °C en tant que solvant hydrocarboné, et
c) au moins un solvant éther de glycol liquide à 20 °C,
le rapport en poids du solvant hydrocarboné b) au solvant éther de glycol c) étant d'au moins 1:0,75 et d'au plus 1:0,9.

2. Composition selon la revendication 1, comprenant en outre
au moins un pigment d) et le cas échéant au moins un agent matifiant e), le cas échéant au moins une charge f), en particulier des silicates, le cas échéant au moins un agent mouillant g) et/ou le cas échéant au moins un pigment anticorrosion h),
ou **caractérisée en ce qu'**elle est essentiellement exempte de pigments et le cas échéant exempte de charges.

3. Composition selon la revendication 1 ou 2, **caractérisée en ce que**
le polyuréthane fonctionnalisé par un silane est formé à partir de diisocyanates, en particulier de diisocyanate de 2,2,4-triméthylhexane (TMDI) et/ou de diisocyanate d'isophorone (IPDI), de polyols et d'alcoxysilanes.

4. Composition selon l'une quelconque des revendications précédentes, **caractérisée en ce que**
le composant de résine alkyde de la résine alkyde de polyuréthane est basé essentiellement exclusivement sur des acides gras qui sont essentiellement exempts de doubles liaisons, en particulier sur l'acide palmitique, laurique, myristique, stéarique, caprylique et/ou caprique.

5. Composition selon la revendication 3 ou 4, **caractérisée en ce que**
les polyols sont des polyols linéaires et/ou sont choisis dans le groupe consistant en les résines alkydes, les polyesters, les polycarbonatediols, les silanols, les acrylates et leurs mélanges quelconques et/ou **en ce que**
les alcoxysilanes comprennent ou représentent, en particulaire des éthoxysilanes, des trialcoxysilanes, notamment des triéthoxysilanes, et/ou des aminosilanes alcoxylés, de préférence des aminosilanes éthoxylés et de manière particulièrement préférée des aminosilanes triéthoxylés

6. Composition selon l'une quelconque des revendications 2 à 5, **caractérisée en ce que**
l'agent matifiant e) est choisi dans le groupe consistant en les cires, la silice pyrogénée, la silice précipitée, les silices précipitées post-traitées avec de la cire, les silices pyrogénées post-traitées avec de la cire et leurs mélanges quelconques et/ou **en ce que**
le pigment d) est choisi parmi le dioxyde de titane, en particulier le rutile, les pigments colorés inorganiques, les pigments colorés organiques et leurs mélanges quelconques.

7. Composition selon la revendication 6, **caractérisée en ce que**
le dioxyde de titane, en particulier le rutile, n'a pas été soumis à un post-traitement organique et/ou a été soumis à au moins un post-traitement inorganique, en particulier est revêtu d'oxyde d'aluminium et/ou de dioxyde de silicium et/ou d'oxyde de zirconium, et/ou a été obtenu sans adjuvant de broyage et/ou a été obtenu selon le procédé au chlorure.

8. Composition selon l'une quelconque des revendications précédentes, **caractérisée en ce que**
la proportion d'hydrocarbures, de cétones et/ou d'esters contenant un aromatique, par rapport au poids total de la composition, est inférieure ou égale à 0,5 % en poids, de préférence inférieure ou égale à 0,3 % en poids et de manière particulièrement préférée inférieure ou égale à 0,1 % en poids.

9. Composition selon l'une quelconque des revendications précédentes, **caractérisée en ce que**
le solvant hydrocarboné ne contient essentiellement pas d'hydrocarbures contenant des aromatiques, de cétones et/ou d'esters, en particulier pas d'hydrocarbures, de cétones et d'esters contenant des aromatiques, et/ou
**en ce que** cette composition est essentiellement exempte de siccatifs, en particulier essentiellement exempte de siccatifs de sels métalliques, et/ou essentiellement exempte d'agents de prévention de la peau, en particulier d'agents de prévention de la peau oximes.

10. Composition selon l'une quelconque des revendications précédentes, **caractérisée en ce que**
le solvant éther de glycol c) est choisi dans le groupe consistant en le 1-méthoxy-2-propanol, le 2-butoxyéthanol, le diméthyléther de di(propylèneglycol), le méthoxybutanol, le 2-(2-butoxyéthoxy)éthanol, le monométhyléther de dipropylèneglycol et leurs mélanges quelconques, de préférence le monométhyléther de dipropylèneglycol et/ou le 1-méthoxy-2-propanol, et de manière particulièrement préférée comprenant ou représentant le monométhyléther de dipropylèneglycol.

11. Système de revêtement 2K comprenant
au moins une composition selon l'une quelconque des revendications précédentes et au moins un catalyseur de réticulation pour la réticulation du polyuréthane fonctionnalisé par un silane.

12. Système de revêtement 2K selon la revendication 11, **caractérisé en ce que** le polyuréthane fonctionnalisé par un silane peut être durci en présence de l'au moins un catalyseur de réticulation.

13. Système de revêtement 2K selon la revendication 11 ou 12, **caractérisé en ce que** le catalyseur de réticulation est choisi dans le groupe consistant en les acides, les sulfonates, les titanates, les amines et leurs mélanges quelconques, en particulier comprenant les acides.

14. Système de revêtement 2K selon la revendication 13, **caractérisé en ce que** les acides sont choisis dans le groupe consistant en l'acide dinonylnaphtalènedisulfonique, l'acide dinonylnaphtalènesulfonique, l'acide dodécylbenzènesulfonique, l'acide para-toluènesulfonique, l'hydrogénophosphate de bis(2-éthylhexyle) et comprennent leurs mélanges quelconques.

15. Utilisation de la composition selon l'une quelconque des revendications 1 à 10 en tant que composant d'un système de revêtement 2K pour un vernis de construction ou pour un vernis transparent.

16. Utilisation du système de revêtement 2K selon l'une quelconque des revendications 11 à 14 en tant que vernis de construction ou en tant que vernis transparent.
